(19)

Europäisches
Patentamt
European
Patent Office
Office européen
des brevets

(11) **EP 3 053 948 A1**

(12) **EUROPEAN PATENT APPLICATION**
published in accordance with Art. 153(4) EPC

(43) Date of publication:
**10.08.2016 Bulletin 2016/32**

(21) Application number: **14848729.1**

(22) Date of filing: **29.09.2014**

(51) Int Cl.:
***C08J 9/04*** (2006.01)      ***C09J 7/02*** (2006.01)
***C09J 201/00*** (2006.01)

(86) International application number:
**PCT/JP2014/075935**

(87) International publication number:
**WO 2015/046526 (02.04.2015 Gazette 2015/13)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.09.2013 JP 2013205452**
**27.03.2014 JP 2014066944**

(71) Applicant: **Sekisui Chemical Co., Ltd.**
**Osaka-shi, Osaka 530-8565 (JP)**

(72) Inventors:
• YACHI, Koji
  **Hasuda-shi**
  **Saitama 349-0198 (JP)**
• MASAKI, Katsue
  **Hasuda-shi**
  **Saitama 349-0198 (JP)**

(74) Representative: **Merkle, Gebhard**
**Ter Meer Steinmeister & Partner**
**Patentanwälte mbB**
**Nymphenburger Straße 4**
**80335 München (DE)**

(54) **CROSSLINKED POLYOLEFIN RESIN FOAM SHEET**

(57)      Provided is a crosslinked polyolefin-based resin foam sheet of the present invention having a large number of foam cells, which is obtained by crosslinking and foaming a polyolefin-based resin, and in which the foaming ratio is 1.1 to 2.8 cm$^3$/g, the average cell diameter in the MD of the foam cells is 150 to 250 $\mu$m, the average cell diameter in the CD is 120 to 300 $\mu$m, the ratio of the average cell diameter in the MD to the average cell diameter in the CD (MD/CD) of the foam cells is 0.75 to 1.25, and the ratio of the average cell diameter in the MD to the average cell diameter in the ZD (MD/ZD) is 1.9 to 7.0.

EP 3 053 948 A1

## Description

Technical Field

The present invention relates to a crosslinked polyolefin-based resin foam sheet obtainable by crosslinking and foaming a polyolefin-based resin, and more particularly, the invention relates to a crosslinked polyolefin-based resin foam sheet that can be suitably used as an impact absorbing material.

Background Art

Foam sheets having large numbers of foam cells formed inside a resin layer have excellent buffering properties, and are therefore widely used in impact absorbing materials for various electronic devices. Impact absorbing materials are used in, for example, display devices used for mobile telephones, personal computers, electronic papers, and the like, in a state of being disposed between a glass plate that constitutes the device surface and an image display member. Regarding the foam sheets used for such applications, polyolefin-based resins are known (see, for example, PTL 1).

Furthermore, it is also known that a foam sheet may have the cell diameters appropriately adjusted in order to obtain satisfactory mechanical strength or flexibility (see, for example, PTL 2).

Citation List

Patent Literature

[PTL 1] JP-A-8-277339
[PTL 2] JP-A-2010-185086

Summary of Invention

Technical Problem

In recent years, along with the size reduction of electronic equipment, foam sheets that are used in electronic equipment applications, particularly in display devices, are required to have high impact absorption performance while having a small thickness.

Furthermore, electronic equipment may malfunction due to the influence of static electricity. For example, since touch panel type display devices are extensively used in mobile telephones, particularly in smartphones, malfunctions are likely to occur such that LCD's and the like do not become lighted due to the influence of static electricity. Therefore, foam sheets are also required to have a function of the resistance to static electricity in electronic equipment.

The invention was achieved under such circumstances as described above, and it is an object of the invention to provide a foam sheet which exhibits satisfactory impact absorption performance even at a small thickness, and increases the resistance to static electricity of electronic equipment.

Solution to Problem

The present inventors conducted a thorough investigation, and as a result, the inventors found that when the cell diameters in the MD, CD and ZD of foam cells are adjusted to predetermined ranges while the foaming ratio is suppressed to a low level, a foam sheet having satisfactory impact absorption performance and having high voltage resistance performance may be obtained, and thus the problems described above can be solved. Thus, the inventors completed the following invention.

That is, the invention is intended to provide the following items (1) to (6).

(1) A crosslinked polyolefin-based resin foam sheet having plural foam cells, the foam sheet being obtained by crosslinking and foaming a polyolefin-based resin, in which the foaming ratio is 1.1 to 2.8 $cm^3/g$, the average cell diameter in MD of the foam cells is 150 to 250 $\mu m$, the average cell diameter in CD is 120 to 300 $\mu m$, the ratio of the average cell diameter in the MD to the average cell diameter in the CD (MD/CD) is 0.75 to 1.25, and the ratio of the average cell diameter in the MD to the average cell diameter in ZD (MD/ZD) is 1.9 to 7.0.

(2) The crosslinked polyolefin-based resin foam sheet according to (1), in which the thickness is 0.02 to 1.9 mm.

(3) The crosslinked polyolefin-based resin foam sheet according to (1) or (2), in which the polyolefin-based resin is a polyethylene-based resin.

(4) The crosslinked polyolefin-based resin foam sheet according to (3), in which the polyethylene-based resin is a polyethylene-based resin obtained using a metallocene compound as a polymerization catalyst, or an ethylene-vinyl acetate copolymer.

(5) An adhesive tape obtained by providing an adhesive layer on at least one surface of the crosslinked polyolefin-based resin foam sheet according to any one of (1) to (4).

(6) The adhesive tape according to (5), in which the thickness is 0.03 to 2.0 mm.

Advantageous Effects of Invention

According to this invention, a crosslinked polyolefin-based resin foam sheet which has high impact absorbability and also increases the resistance to static electricity of electronic equipment can be provided.

Description of Embodiments

[Crosslinked polyolefin-based resin foam sheet]

The crosslinked polyolefin-based resin foam sheet of the invention (hereinafter, also simply referred to as "foam sheet") is a sheet obtainable by crosslinking and foaming a polyolefin-based resin, and has a large number of foam cells.

Hereinafter, the crosslinked polyolefin-based resin foam sheet of the invention will be explained in more detail.

<Average cell diameter>

The average cell diameter of the foam cells in the foam sheet is 150 to 250 $\mu$m in the MD, and 120 to 300 $\mu$m in the CD. When these average cell diameters are not in the ranges described above, sufficient voltage resistance performance may not be secured, and there is also a risk that impact resistance performance may be decreased. In order to make both the voltage resistance performance and the impact resistance performance more satisfactory, it is preferable that the average cell diameter in the MD is 160 to 240 $\mu$m, while the average cell diameter in the CD is 140 to 280 $\mu$m; and it is more preferable that the average cell diameter in the MD is 170 to 230 $\mu$m, while the average cell diameter in the CD is 150 to 250 $\mu$m.

Meanwhile, the term MD, which means the machine direction, is a direction coincident with the direction of extrusion or the like, and the term CD, which means the cross machine direction, is a direction that perpendicularly intersects the MD and is parallel to the foam sheet. Furthermore, the term ZD means the thickness direction of the foam sheet, and is a direction perpendicular to both the MD and the CD. Also, the average cell diameter is a value measured according to the method of Examples described below.

<Aspect ratios MD/CD and MD/ZD>

In the foam sheet of the invention, the ratio of the average cell diameter in the MD with respect to the average cell diameter in the CD of the foam cells (hereinafter, also referred to as "MD/CD") is 0.75 to 1.25, and the ratio of the average cell diameter in the MD with respect to the average cell diameter in the ZD (hereinafter, also referred to as "MD/ZD") is 1.9 to 7.0.

When the ratio MD/CD is not in the range described above, the foam cells in a plane that is parallel to the MD and the CD are likely to have a flat shape, and since the number of cell walls per unit width is not uniform in the MD direction and the CD direction, the foam sheet may not exhibit sufficient voltage resistance performance. Also, if the ratio MD/ZD has a value of less than 1.9, the oblateness of the foam cells in a plane parallel to the MD and the ZD decreases, and flexibility may not be sufficiently increased. Furthermore, if the ratio MD/ZD has a value larger than 7.0, a sufficient thickness of the cell walls may not be secured, and the impact resistance performance of the foam sheet may not be sufficiently increased.

On the other hand, when both the ratios MD/CD and MD/ZD fall within the ranges described above, a sufficient number of cell walls per unit width in the MD and the CD is secured, and thus the voltage resistance performance of the foam sheet can be improved, while the resistance to static electricity of electronic equipment such as a smartphone can be increased.

In order to secure more stable voltage resistance performance, the ratio MD/CD is preferably 0.80 to 1.2. Furthermore, in order to make both the voltage resistance performance and the impact resistance performance more satisfactory, the ratio MD/ZD is preferably 1.9 to 5.0, and in order to easily make the impact resistance performance more satisfactorily, the ratio MD/ZD is more preferably 1.9 to 3.0.

<Foaming ratio>

According to the invention, the foaming ratio of the foam sheet is set to 1.1 to 2.8 cm³/g. According to the invention, if the foaming ratio of the foam sheet is not in the range described above, there is a risk that sufficient impact absorption performance and sealability of the foam sheet may not be secured. Also, if the foaming ratio is higher than 2.8 cm³/g, the resin density is decreased, and there is a risk that sufficient voltage resistance performance may not be secured.

In order to further improve the voltage resistance performance, impact absorption performance, and sealability, the foaming ratio of the foam sheet is preferably 1.3 to 2.6 cm³/g, and more preferably 1.5 to 2.4 cm³/g.

<Thickness>

The foam sheet of the invention has satisfactory impact absorbability and satisfactory voltage resistance performance even when the foam sheet has a small thickness, and the thickness is preferably 0.02 to 1.9 mm.

When the thickness is adjusted to 0.02 mm or more, satisfactory impact absorbability and sealability can be easily obtained. Also, when the thickness is adjusted to 1.9 mm or less, thickness reduction of the equipment can be coped with more easily. From these points of view, the thickness of the foam sheet is preferably 0.03 to 1.0 mm, and more preferably 0.04 to 0.5 mm.

<Closed cell ratio>

It is preferable that the foam cells of the foam sheet are closed cells. When it is said that foam cells are closed cells, this means that the ratio of closed cells with respect to the entirety of cells (referred to as closed cell ratio) is 65% or more. When foam cells are closed cells, upon being subjected to an impact, the quantity of deformation of foam cells is suppressed. Thus, the quantity of deformation of the foam sheet against impact is suppressed, and the impact absorption performance can be more easily increased.

In order to further enhance the impact absorption performance, the closed cell ratio is preferably 75% or more, and more preferably 85% or more.

Meanwhile, the closed cell ratio refers to a property measured according to ASTM D2856 (1998).

<25% Compressive strength>

The 25% compressive strength of the crosslinked polyolefin-based resin foam sheet is not particularly limited; however, the 25% compressive strength is preferably 250 to 1500 kPa, more preferably 300 to 1200 kPa, and even more preferably 350 to 1000 kPa. When the 25% compressive strength is in the range described above, the crosslinked polyolefin-based resin foam sheet has adequate flexibility, and satisfactory impact absorbability and sealability may be easily obtained.

Meanwhile, the 25% compressive strength of the foam sheet refers to a property measured according to JIS K 6767.

<Degree of crosslinking>

The degree of crosslinking is the percentage of gel measured by the measurement method described below, and represents the degree of crosslinking of the foam sheet. The degree of crosslinking (gel%) of the foam sheet is preferably 2% to 50% by mass, and more preferably 20% to 50% by mass. When the degree of crosslinking is equal to or greater than the lower limit value, sufficient crosslinking is formed in the foam sheet, and the impact absorbability and sealability can be increased. Also, when the degree of crosslinking is equal to or less than the upper limit value, flexibility of the foam sheet is secured, and appropriate impact absorbability and sealability are easily obtained.

[Polyolefin-based resin]

Examples of the polyolefin-based resin that is used for forming the foam sheet include a polyethylene-based resin, a polypropylene-based resin, and a mixture thereof. Among these, the polyethylene-based resin is preferred. More specific examples include a polyethylene-based resin, a polypropylene-based resin, and a mixture thereof, each of which has been polymerized using a polymerization catalyst such as a Ziegler-Natta compound, a metallocene compound, or a chromium oxide compound, and among these, the polyethylene-based resin polymerized using a polymerization catalyst of a metallocene compound is preferred.

The polyethylene-based resin may be an ethylene homopolymer; however, a polyethylene-based resin obtainable by copolymerizing ethylene and optionally a small amount (for example, 30% by mass or less, and preferably 10% by mass or less, of the total amount of monomers) of an α-olefin is preferred, and above all, a linear low-density polyethylene is preferred.

When a polyethylene-based resin, particularly a linear low-density polyethylene, which is obtained by means of a polymerization catalyst of a metallocene compound is used, a foam sheet having high flexibility and high impact absorbability may be easily obtained. Also, as will be described below, the foam sheet can easily maintain high performance even if the foam sheet is made thin.

Specific examples of the α-olefin that constitutes the polyethylene-based resin include propylene, 1-butene, 1-pentene, 4-methyl-1-pentene, 1-hexene, 1-heptene, and 1-octene. Among them, an α-olefin having 4 to 10 carbon atoms is preferred.

Furthermore, regarding the polyethylene-based resin, an ethylene-vinyl acetate copolymer is also preferred. An ethylene-vinyl acetate copolymer is a copolymer which usually contains 50% by mass or more of an ethylene unit.

The polyethylene-based resin obtained using a polymerization catalyst of a metallocene compound, the ethylene-vinyl acetate copolymer, or a mixture thereof is preferably included in an amount of 40% by mass or more, more preferably 50% by mass or more, even more preferably 60% by mass or more, and most preferably 100% by mass, relative to the total amount of the polyolefin-based resin in the foam sheet.

Furthermore, examples of the polypropylene-based resin include a propylene homopolymer, and a propylene-α-olefin copolymer containing 50% by mass or more of a propylene unit. These may be used singly, or two or more kinds thereof may be used in combination.

Specific examples of the α-olefin that constitutes the propylene-α-olefin copolymer include ethylene, 1-butene, 1-pentene, 4-methyl-1-pentene, 1-hexene, 1-heptene, and 1-octene. Among these, an α-olefin having 6 to 12 carbon atoms is preferred.

<Metallocene compound>

Suitable examples of the metallocene compound include compounds such as a bis(cyclopentadienyl) metal complex having a structure in which a transition metal atom is disposed between atoms of an unsaturated compound of a π-electron system. More specific examples include compounds in which a tetravalent transition metal such as titanium, zirconium, nickel, palladium, hafnium, or platinum is coordinated with one or two or more cyclopentadienyl rings or an analogue thereof as a ligand.

Such a metallocene compound has uniform properties of the active points, and various active points have the same degree of activity. Since a polymer synthesized using a metallocene compound has high uniformity in the molecular weight, molecular weight distribution, composition, composition distribution, and the like, when a sheet containing a polymer synthesized using a metallocene compound is crosslinked, crosslinking proceeds uniformly. Since a uniformly crosslinked sheet can be easily stretched uniformly, the thickness of the crosslinked polyolefin-based resin foam sheet can be easily made uniform, and high performance can be easily maintained even if the foam sheet is made thinner.

Examples of the ligand include a cyclopentadienyl ring and an indenyl ring. These cyclic compounds may be further substituted with a hydrocarbon group, a substituted hydrocarbon group, or a hydrocarbon-substituted metalloid group. Examples of the hydrocarbon group include a methyl group, an ethyl group, various propyl groups, various butyl groups, various amyl groups, various hexyl groups, a 2-ethylhexyl group, various heptyl groups, various octyl groups, various nonyl groups, various decyl groups, various cetyl groups, and a phenyl group. Meanwhile, the term "various" means various isomers including n-, sec-, tert-, and iso-forms.

Furthermore, a product obtained by polymerizing a cyclic compound as an oligomer may also be used as a ligand.

Furthermore, in addition to the unsaturated compound of a π-electron system, a monovalent anion ligand such as chlorine or bromine, a divalent anion chelate ligand, a hydrocarbon, an alkoxide, an arylamide, an aryl oxide, an amide, an arylamide, a phosphide, an aryl phosphide, or the like may also be used.

Examples of the metallocene compound containing a tetravalent transition metal or a ligand include cyclopentadienyltitanium tris(dimethylamide), methylcyclopentadienyltitanium tris(dimethylamide), bis(cyclopentadienyl)titanium dichloride, and dimethylsilyltetramethylcyclopentadienyl-t-butylamidozirconium dichloride.

A metallocene compound exhibits its action as a catalyst at the time of polymerization of various olefins, when combined with a particular co-catalyst (promoter). Specific examples of the co-catalyst include methylaluminoxane (MAO) and boron-based compounds. Meanwhile, the use ratio of the co-catalyst with respect to the metallocene compound is preferably 10 to 1,000,000 times, and more preferably 50 to 5,000 times, by moles.

<Ziegler-Natta compound>

A Ziegler-Natta compound is a triethylaluminum-titanium tetrachloride solid composite, and a product produced by a method of combining a titanium trichloride composition obtained by reducing titanium tetrachloride with an organoaluminum compound, and treating the resultant with various electron donors and electron receptors, with an organoaluminum compound and an aromatic carboxylic acid ester (see JP-A-56-100806, JP-A-56-120712, and JP-A-58-104907); a product produced by a method of using a supported catalyst by bringing a magnesium halide into contact with titanium tetrachloride and various electron donors (see JP-A-57-63310, JP-A-63-43915, and JP-A-63-83116); and the like are preferred.

The polyethylene-based resin is preferably a low density polyethylene-based resin in order to increase flexibility of the foam sheet and to increase impact absorbability. The density of the polyethylene-based resin is specifically preferably 0.920 g/cm$^3$ or less, more preferably 0.880 to 0.915 g/cm$^3$, and particularly preferably 0.885 to 0.910 g/cm$^3$.

Meanwhile, the density is a value measured according to ASTM D792.

Meanwhile, regarding the polyolefin-based resin, a resin other than the polyolefin-based resins described above can also be used, and a resin other than a polyethylene-based resin and a polypropylene-based resin may also be used as a mixture with a polyethylene-based resin or a polypropylene-based resin.

The polyolefin-based resin may be mixed with various additives and other optional components that are described below, and the foam sheet may be a product of crosslinking and foaming the mixture.

Examples of the optional components that are incorporated into the foam sheet include resins other than polyolefin-based resins, and rubber. The total content of these optional components is smaller than the content of the polyolefin-based resin, and the content is usually 50 parts by mass or less, and preferably 30 parts by mass or less, relative to 100 parts by mass of the polyolefin-based resin.

Meanwhile, foaming of the polyolefin-based resin is preferably carried out using a thermally decomposable foaming agent as will be described below; however, foaming may also be achieved by other methods. Furthermore, crosslinking of the polyolefin-based resin is preferably carried out by irradiation with ionizing radiation that is described below; however, other methods may also be carried out.

[Method for producing foam sheet]

The method for producing a foam sheet is not particularly limited; however, for example, the production method includes the following steps (1) to (3).

Step (1): a step of melting and kneading a polyolefin-based resin, additives such as a thermally decomposable foaming agent, and other optional components that are added as needed at a temperature lower than the decomposition temperature of the thermally decomposable foaming agent, and molding the mixture into a sheet-shaped foam composition by a known molding method;

Step (2): a step of crosslinking the sheet-shaped foam composition obtained in Step (1); and

Step (3): a step of foaming the sheet-shaped foam composition by heating the foam composition at a temperature higher than or equal to the decomposition temperature of the thermally decomposable foaming agent, and stretching the sheet-shaped foam composition in the MD and the CD such that the ratio MD/CD of the foam sheet thus obtainable is 0.75 to 1.25, and the ratio MD/ZD is 1.9 to 7.0.

(Step (1))

In Step (1), a polyolefin-based resin, additives such as a thermally decomposable foaming agent, and other optional components are supplied to an extruder such as a single-screw extruder or a twin-screw extruder, the mixture is melted and kneaded at a temperature lower than the decomposition temperature of the thermally decomposable foaming agent, and the kneaded product is extruded by extrusion molding. Thus, a sheet-shaped foam composition is produced.

Examples of the additives other than the thermally decomposable foaming agent used herein include a decomposition temperature regulating agent, a crosslinking aid, an oxidation inhibitor, a cell nucleating agent, a colorant, a flame retardant, an antistatic agent, and a filler material.

<Thermally decomposable foaming agent>

Regarding the thermally decomposable foaming agent, for example, an agent having a decomposition temperature that is higher than the melting temperature of the resin is used. For example, an organic or inorganic chemical foaming agent having a decomposition temperature of 160°C to 270°C is used.

Examples of the organic foaming agent include azo compounds such as azodicarbonamide, azodicarboxylic acid metal salts (barium azodicarboxylate and the like), and azobisisobutyronitrile; nitroso compounds such as N,N'-dinitrosopentamethylenetetramine; hydrazine derivatives such as hydrazodicarbonamide, 4,4'-oxybis(benzenesulfonyl hydrazide), and toluenesulfonyl hydrazide; and semicarbazide compounds such as toluenesulfonyl semicarbazide.

Examples of the inorganic foaming agent include an ammonium salt of acids, sodium carbonate, ammonium hydrogen carbonate, sodium hydrogen carbonate, ammonium nitrite, sodium borohydride, and anhydrous monosodium citrate.

Among these, from the viewpoint of obtaining fine foam cells, and from the viewpoints of economic efficiency and safety, azo compounds and nitroso compounds are preferred; azodicarbonamide, azobisisobutyronitrile, and N,N'-dinitrosopentamethylenetetramine are more preferred; and azodicarbonamide is even more preferred.

These thermally decomposable foaming agents are used singly or in combination of two or more kinds thereof.

The amount of addition of the thermally decomposable foaming agent is preferably 1 part to 10 parts by mass, more preferably 1.5 parts to 5 parts by mass, and even more preferably 1.5 parts to 3 parts by mass, relative to 100 parts by mass of the polyolefin-based resin.

<Other additives>

A decomposition temperature regulating agent is a compound incorporated in order to regulate the conditions by lowering the decomposition temperature of the thermally decomposable foaming agent or accelerating the decomposition rate, and specific compound examples include zinc oxide, zinc stearate, and urea. The decomposition temperature regulating agent is incorporated in an amount of, for example, 0.01 parts to 5 parts by mass relative to 100 parts by mass of the polyolefin-based resin, in order to adjust the surface state and the like of the foam sheet.

As the crosslinking aid, a polyfunctional monomer can be used. When a crosslinking aid is added to the polyolefin-based resin, the amount of irradiation with ionizing radiation in Step (2) described below is reduced, and the cleavage and deterioration of resin molecules accompanied by the irradiation with ionizing radiation is prevented.

Specific examples of the crosslinking aid include compounds having three functional groups in one molecule, such as trimethylolpropane trimethacrylate, trimethylolpropane triacrylate, trimellitic acid triallyl ester, 1,2,4-benzenetricarboxylic acid triallyl ester, and triallyl isocyanurate; compounds having two functional groups in one molecule, such as 1,6-hexanediol dimethacrylate, 1,9-nonanediol dimethacrylate, 1,10-decanediol dimethacrylate, and divinylbenzene; diallyl phthalate, diallyl terephthalate, diallyl isophthalate, ethylvinylbenzene, neopentyl glycol dimethacrylate, lauryl methacrylate, and stearyl methacrylate. These crosslinking aids are used singly or in combination of two or more kinds thereof.

The amount of addition of the crosslinking aid is preferably 0.2 parts to 10 parts by mass, more preferably 0.3 parts to 5 parts by mass, and even more preferably 0.5 parts to 5 parts by mass, relative to 100 parts by mass of the resin components. When the amount of addition is 0.2 parts by mass or more, the foam sheet can stably attain a desired degree of crosslinking, and when the amount of addition is 10 parts by mass or less, the control of the degree of crosslinking of the foam sheet is facilitated.

Furthermore, examples of the oxidation inhibitor include phenolic oxidation inhibitors such as 2,6-di-t-butyl-p-cresol.

(Step (2))

In Step (2), the foam composition molded into a sheet shape in Step (1) is crosslinked.

Crosslinking in Step (2) is preferably carried out by irradiating the foam composition with ionizing radiation. Examples of the ionizing radiation include α-radiation, β-radiation, γ-radiation, and an electron beam, and an electron beam is more preferred.

The dose of the ionizing radiation to the sheet-shaped foam composition is preferably 1.0 to 10.0 Mrad, and more preferably 1.5 to 8.0 Mrad. Also, the dose of the ionizing radiation in the case of using a crosslinking aid is preferably 0.3 to 8.0 Mrad, and more preferably 0.5 to 6.0 Mrad.

When the dose of the ionizing radiation is set to an amount equal to or more than the lower limit, the shear viscosity required for foaming of the foam composition can be easily imparted. Furthermore, when the dose is set to an amount equal to or less than the upper limit, the shear viscosity of the foam composition does not increase too high, and satisfactory foamability is obtained. Therefore, a foam sheet having the above-mentioned foaming ratio may be easily obtained, and satisfactory external appearance of the foam sheet is also obtained.

However, since the degree of progress of crosslinking is usually affected by the polyolefin-based resin, the kind of the additive, and the like, the dose of the ionizing radiation is usually adjusted while the degree of crosslinking is measured, and preferably, the degree of crosslinking of the foam sheet is adjusted to the range described above.

(Step (3))

In Step (3), the sheet-shaped foam composition is foamed by heating the foam composition at a temperature equal to or higher than the decomposition temperature of the thermally decomposable foaming agent. Usually, this Step (3) is carried out after Step (2).

The temperature for heating and foaming may vary depending on the decomposition temperature of the thermally decomposable foaming agent; however, the temperature is usually 140°C to 300°C, and preferably 160°C to 260°C.

Furthermore, the method for foaming the foam composition is not particularly limited, and examples thereof include a method of heating by means of hot air, a method of heating by means of infrared radiation, a method of using a salt bath, and a method of using an oil bath, which may be used in combination.

Furthermore, the foam composition is stretched in the MD and the CD such that the ratio MD/CD of the foam sheet thus obtainable is 0.75 to 1.25, and the ratio MD/ZD is 1.9 to 7.0. Stretching may be carried out while the sheet-shaped foam composition is foamed, or may be carried out after the sheet-shaped foam composition has been foamed. Stretching may be carried out using, for example, a known apparatus such as a uniaxial stretching machine or a biaxial stretching machine.

Meanwhile, in a case in which stretching is performed after the sheet-shaped foam composition is foamed, it is desirable to perform stretching continuously while the molten state at the time of foaming is maintained, without cooling the foam composition. However, it is also acceptable to perform stretching after the foam composition is cooled and then heated again to obtain a molten state or a softened state.

Furthermore, the stretch ratios in the MD and the CD at the time of stretching the sheet-shaped foam composition are respectively preferably 1.1 to 5.0 times, more preferably 1.3 to 4.0 times, and even more preferably 1.3 to 3.0 times. When the stretch ratios in the MD and CD of the crosslinked polyolefin-based resin foam sheet are adjusted to the ranges described above, the ratio MD/CD of the foam sheet may be easily adjusted to the value range described above. Also, by adjusting the stretch ratio to a value equal to or less than the upper limit, breakage of the sheet-shaped foam composition during stretching is prevented, or reduction of the foaming ratio caused by escaping of a foaming gas from the foam composition during foaming is prevented. Thus, flexibility and tensile strength of the foam sheet become satisfactory, and the product quality can be easily made uniform.

Furthermore, an example performing crosslinking using ionizing radiation has been explained in the above; however, the invention may also be carried out by a method of incorporating a crosslinking agent such as an organic peroxide as an additive to the foam composition, and decomposing the organic peroxide by heating the foam composition. Examples of such an organic peroxide include 1,1-bis(t-butylperoxy)-3,3,5-trimethylcyclohexane and 1,1-bis(t-butylperoxy)cyclohexane.

The amount of addition of the organic peroxide is preferably 0.01 parts to 5 parts by mass, and more preferably 0.1 parts to 3 parts by mass, relative to 100 parts by mass of the polyolefin-based resin. When the amount of addition of the organic peroxide is in the range described above, crosslinking of the foam composition can proceed easily, and the amount of decomposition residue of the organic peroxide in the foam sheet is suppressed.

Furthermore, the foam composition may be foamed by means of gas foaming represented by carbon dioxide or butane gas, instead of using the foaming agent described above, or may be foamed by a mechanical frothing method.

[Adhesive tape]

The adhesive tape of the invention is an adhesive tape which uses the foam sheet according to the invention as a substrate, and is provided with an adhesive layer on any one surface or on both surfaces of the foam sheet. The thickness of the adhesive tape is usually 0.03 to 2.0 mm, and preferably 0.03 to 1.0 mm.

The thickness of the adhesive layer that constitutes the adhesive tape is preferably 5 to 200 $\mu$m. The thickness of the adhesive layer is more preferably 7 to 150 $\mu$m, and even more preferably 10 to 100 $\mu$m. When the thickness of the adhesive layer that constitutes the adhesive tape is in the range of 5 to 200 $\mu$m, the thickness of the adhesive tape, and the thickness of the electronic equipment that uses the adhesive tape are decreased.

The adhesive that constitutes the adhesive layer provided on any one surface or on both surfaces of the foam sheet is not particularly limited, and for example, an acrylic adhesive, a urethane-based adhesive, a rubber-based adhesive, and a silicone-based adhesive are used.

Regarding the method of applying an adhesive on the foam sheet and laminating an adhesive layer on the foam sheet, examples include a method of applying an adhesive on at least one surface of the foam sheet using a coating machine such as a coater; a method of applying an adhesive on at least one surface of the foam sheet by spraying the adhesive using a spray; and a method of applying an adhesive on one surface of the foam sheet using a brush.

[Method of using foam sheet]

The foam sheet and the adhesive tape are used in, for example, the main bodies of electronic equipment such as mobile telephones and video cameras, and more preferably, the foam sheet and the adhesive tape are used in the display devices of mobile telephones.

The foam sheet and the adhesive tape are used in a state of, for example, being interposed between two members and compressed in the thickness direction (ZD). Then, the foam sheet and the adhesive tape are used as an impact absorbing material that absorbs the impact exerted on any one side or on both sides of the members, or as a sealing material that prevents dust and the like from penetrating in between the two members.

According to the invention, when the foaming ratio of the foam sheet is adjusted to 1.1 to 2.8 cm$^3$/g, the average cell diameters in the MD and the CD of the foam cells in the foam sheet are adjusted to predetermined lengths, and the aspect ratios MD/CD and MD/ZD are adjusted to 0.75 to 1.25 and 1.9 to 7.0, respectively, the voltage resistance performance can be increased while the impact absorbability of the foam sheet is satisfactorily maintained. Therefore, when the foam sheet of the invention is used for electronic equipment applications, the resistance to static electricity of the electronic equipment can be increased while the various components of the electronic equipment are appropriately protected. Furthermore, since the foam sheet has appropriate compressive strength, sealability between the components is also easily improved.

EXAMPLES

The invention will be described in more detail by way of Examples, but the invention is not intended to be limited by these Examples.

[Measuring methods]

The methods for measuring various physical properties according to the present specification are as follows.

<Foaming ratio>

The density of the crosslinked polyolefin-based resin foam sheet was measured according to JIS K 7222, and the reciprocal thereof was defined as the foaming ratio.

<Average cell diameter>

A foam sample for measurement was cut to a size which measured 50 mm on all four sides, and the foam sample was immersed in liquid nitrogen for 1 minute, and then was cut along the plane parallel to the MD and the ZD with a razor. Subsequently, photographs at a magnification ratio of 200 times were taken using a digital microscope (manufactured by Keyence Corp., product name: VHX-900), and the cell diameters in the MD and the ZD were measured for all of the foam cells present in a cut surface divided into portions having a length of 2 mm in the MD. This operation was repeated five times, and the average value of all the MD cell diameters was defined as the average cell diameter in the MD.

Photographs at a magnification ratio of 200 times were taken in the same manner as described above, except that the foam sample was cut along a plane parallel to the CD and the ZD, and the cell diameters in the CD and the ZD were measured for all of the foam cells present in a cut surface divided into portions having a length of 2 mm in the CD. This operation was repeated five times. Subsequently, the average value of all the CD cell diameters was defined as the average cell diameter in the CD.

Furthermore, the average value of all the ZD cell diameters measured by the operation described above was defined as the average cell diameter in the ZD.

<Degree of crosslinking (gel%)>

A specimen weighing about 50 mg was collected from a crosslinked polyolefin-based resin foam sheet, and the weight A (mg) of the specimen was precisely measured. Next, this specimen was immersed in 30 cm$^3$ of xylene at 105°C and was left to stand for 24 hours, and then the system was filtered through a 200-mesh wire gauze to collect an insoluble fraction on the wire gauze. The insoluble fraction was vacuum dried, and the weight B (mg) of the insoluble fraction was precisely weighed. From the values thus obtained, the gel% (mass%) was calculated by the following formula:

$$Gel\% \ (mass\%) = 100 \times (B/A)$$

<Closed cell ratio>

The closed cell ratio was measured according to ASTM D2856 (1998) using ACUPIC 1330 manufactured by Shimadzu Corp.

<25% Compressive strength>

The 25% compressive strength refers to a property measured according to JIS K 6767 for a crosslinked polyolefin-based resin foam sheet. Meanwhile, in the present Examples, measurement was made by overlapping plural sheets such that the total thickness of the foam sheet reached 10 mm.

<Voltage resistance test>

A crosslinked polyolefin-based resin foam sheet having a tape shape which measured 1 mm x 100 mm was inserted in the thickness direction between two sheets of acrylic plates, and such crosslinked polyolefin-based resin foam sheet was inserted in the width direction between two sheets of aluminum plates disposed between the acrylic plates. A voltage was applied in the width direction by a direct current, using a voltage resistance testing machine (TOS501 manufactured by Kikusui Electronics Corp., maximum voltage 12 kV) under the conditions of 23°C and 50% RH. If no electricity conduction occurred at that voltage for 30 seconds, the applied voltage was increased by 0.5 kV. The voltage at the time of electricity conduction was measured, and then the same measurement was made three times. The average value was defined as the measured value of the voltage resistance performance. Meanwhile, according to this measurement, it was considered that no electricity conduction occurred when the current was 0.1 mA or less, and the MD and the CD were measured respectively in the width direction of the tape.

(Evaluation criteria)

When the measured values for the MD and the CD were both 10 kV or higher, it was considered that the voltage resistance performance was satisfactory, and the sample was rated as A.

When any one of the measured values for the MD and the CD was less than 10 kV, and both were 8 kV or higher, the voltage resistance performance was considered suitable for actual use but was not satisfactory. Thus, the sample was rated as B.

When any one of the measured values for the MD and the CD was less than 8 kV, it was considered that the voltage resistance performance was poor, and the sample was rated as C.

Example 1

100 parts by mass of a linear low-density polyethylene [manufactured by ExxonMobil Chemical Company, Inc., density: 0.900 g/cm$^3$, trade name: EXACT3027] as a polyethylene-based resin, 1.9 parts by mass of azodicarbonamide, 0.2 parts by mass of 2,6-di-t-butyl-p-cresol, and 1.8 parts by mass of zinc oxide were supplied to an extruder and were melted and kneaded at 130°C. Thus, a long sheet-shaped foam composition having a thickness of about 0.3 mm was extruded.

Next, the long sheet-shaped foam composition was crosslinked by irradiating both surfaces of the foam composition with an electron beam at an accelerated voltage of 500 kV at a dose of 4.5 Mrad. Subsequently, the foam composition was foamed by sending the foam composition continuously into a foaming furnace maintained at 250°C with hot air and by an infrared heater, and by heating the foam composition. Also, the foam composition was stretched at a stretch ratio in the MD of 1.4 times and at a stretch ratio in the CD of 1.6 times while foaming, and thus a foam sheet having a thickness of 0.2 mm was obtained. The evaluation results of the foam sheet thus obtained are presented in Table 1.

Examples 2 to 5

Foam sheets were obtained in the same manner as in Example 1, except that the amount of incorporation (parts by mass relative to 100 parts by mass of polyethylene) of azodicarbonamide (foaming agent) and the stretch ratios at the time of stretching were changed to the values indicated in Table 1. The evaluation results for the foam sheet thus obtained are presented in Table 1.

Comparative Examples 1 to 4

Foam sheets were obtained in the same manner as in Example 1, except that the amount of incorporation of azodicarbonamide (foaming agent) and the stretch ratios at the time of stretching were changed to the values indicated in Table 1. The evaluation results for the foam sheets thus obtained are presented in Table 1.

[Table 1]

| | | Example | | | | | Comparative Example | | | |
|---|---|---|---|---|---|---|---|---|---|---|
| | | 1 | 2 | 3 | 4 | 5 | 1 | 2 | 3 | 4 |
| Stretch ratio (times) | MD | 1.4 | 1.3 | 1.5 | 1.4 | 1.3 | 2.0 | 1.4 | 1.3 | 2.5 |
| | CD | 1.6 | 1.6 | 1.62 | 1.6 | 1.8 | 1.9 | 2.3 | 2.5 | 1.4 |
| Number of parts of foaming agent (parts by mass) | | 1.9 | 1.7 | 1.9 | 1.7 | 1.5 | 2.3 | 1.9 | 1.9 | 1.5 |
| Thickness (mm) | | 0.2 | 0.2 | 0.2 | 0.15 | 0.15 | 0.2 | 0.2 | 0.15 | 0.15 |
| Foaming ratio ($cm^3$/g) | | 2 | 1.8 | 2.3 | 2 | 1.5 | 3 | 2 | 2 | 1.5 |
| Average cell diameter ($\mu$m) | MD | 185 | 180 | 220 | 200 | 180 | 250 | 210 | 230 | 300 |
| | CD | 210 | 200 | 195 | 170 | 225 | 245 | 330 | 350 | 150 |
| | ZD | 90 | 90 | 95 | 70 | 70 | 68 | 77 | 65 | 60 |
| Aspect ratio | MD/CD | 0.88 | 0.90 | 1.13 | 1.18 | 0.80 | 1.02 | 0.64 | 0.66 | 2.00 |
| | MD/ZD | 2.06 | 2.00 | 2.32 | 2.86 | 2.57 | 3.68 | 2.73 | 3.54 | 5.00 |
| Degree of crosslinking (%) | | 30 | 26 | 27 | 26 | 28 | 30 | 30 | 25 | 27 |
| 25% Compressive strength (kPa) | | 780 | 850 | 550 | 800 | 900 | 120 | 310 | 250 | 500 |
| Voltage resistance performance (kV/1.0 mm) | MD | 12 | 12 | 12 | 12 | 12 | 5 | 10.2 | 9 | 8.4 |
| | CD | 12 | 12 | 12 | 12 | 11.5 | 8.5 | 8.4 | 6.5 | 12 |
| | Evaluation | A | A | A | A | A | C | B | C | B |

In Examples 1 to 5, when the average cell diameters in the MD and the CD, the foaming ratio and the aspect ratios MD/CD and MD/ZD were all adjusted to predetermined ranges, excellent voltage resistance performance was obtained while satisfactory compressive strength was maintained. On the other hand, in Comparative Examples 1 to 4, since any one of the foaming ratio and the aspect ratios MD/CD and MD/Zd was not set to be in the predetermined range, satisfactory voltage resistance performance could not be obtained.

**Claims**

1. A crosslinked polyolefin-based resin foam sheet having plural foam cells, the foam sheet being obtained by crosslinking and foaming a polyolefin-based resin, wherein the foaming ratio is 1.1 to 2.8 $cm^3$/g, the average cell diameter in MD of the foam cells is 150 to 250 $\mu$m, the average cell diameter in CD is 120 to 300 $\mu$m, the ratio of the average cell diameter in the MD to the average cell diameter in the CD (MD/CD) is 0.75 to 1.25, and the ratio of the average cell diameter in the MD to the average cell diameter in ZD (MD/ZD) is 1.9 to 7.0.

2. The crosslinked polyolefin-based resin foam sheet according to claim 1, wherein the thickness is 0.02 to 1.9 mm.

3. The crosslinked polyolefin-based resin foam sheet according to claim 1 or 2, wherein the polyolefin-based resin is a polyethylene-based resin.

4. The crosslinked polyolefin-based resin foam sheet according to claim 3, wherein the polyethylene-based resin is a polyethylene-based resin obtained using a metallocene compound as a polymerization catalyst, or an ethylene-vinyl acetate copolymer.

5. An adhesive tape obtained by providing an adhesive layer on at least one surface of the crosslinked polyolefin-based resin foam sheet according to any one of claims 1 to 4.

6. The adhesive tape according to claim 5, wherein the thickness is 0.03 to 2.0 mm.

## INTERNATIONAL SEARCH REPORT

| International application No. |
|---|
| PCT/JP2014/075935 |

| A. CLASSIFICATION OF SUBJECT MATTER |
|---|
| *C08J9/04*(2006.01)i, *C09J7/02*(2006.01)i, *C09J201/00*(2006.01)i |

According to International Patent Classification (IPC) or to both national classification and IPC

| B. FIELDS SEARCHED |
|---|
| Minimum documentation searched (classification system followed by classification symbols) |
| C08J9/00-9/42, C09J1/00-201/10 |

Documentation searched other than minimum documentation to the extent that such documents are included in the fields searched

| Jitsuyo Shinan Koho | 1922-1996 | Jitsuyo Shinan Toroku Koho | 1996-2014 |
|---|---|---|---|
| Kokai Jitsuyo Shinan Koho | 1971-2014 | Toroku Jitsuyo Shinan Koho | 1994-2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2010-260880 A (DIC Corp.), 18 November 2010 (18.11.2010), paragraphs [0008] to [0010], [0024] to [0025], [0030], [0113] & CN 101857780 A & KR 10-2010-0112528 A | 1-6 |
| Y | WO 2013/099755 A1 (DIC Corp.), 04 July 2013 (04.07.2013), paragraphs [0016] to [0019], [0125] & JP 5299596 B | 1-6 |

| [X] Further documents are listed in the continuation of Box C. | | [ ] See patent family annex. |
|---|---|---|

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| 03 December, 2014 (03.12.14) | 16 December, 2014 (16.12.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

| International application No. |
| --- |
| PCT/JP2014/075935 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2005/007731 A1 (Sekisui Chemical Co., Ltd.), 27 January 2005 (27.01.2005), paragraphs [0031] to [0033], [0101]; claims 1, 2 <br> & JP 2009-242811 A & JP 4578407 B <br> & US 2006/0177642 A1 & US 2008/0057301 A1 <br> & US 2013/0235514 A1 & EP 1645589 A1 <br> & KR 10-2006-0041158 A & KR 10-2008-0114840 A <br> & CN 1768097 A | 1-6 |
| A | JP 2010-185086 A (Sekisui Chemical Co., Ltd.), 26 August 2010 (26.08.2010), claim 1; paragraph [0029] <br> & JP 2004-323842 A & JP 2013-177630 A | 1-6 |
| A | JP 2013-084556 A (Sekisui Plastics Co., Ltd.), 09 May 2013 (09.05.2013), paragraphs [0023] to [0025] <br> (Family: none) | 1-6 |

Form PCT/ISA/210 (continuation of second sheet) (July 2009)

**EP 3 053 948 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 8277339 A
- JP 2010185086 A
- JP 56100806 A
- JP 56120712 A
- JP 58104907 A
- JP 57063310 A
- JP 63043915 A
- JP 63083116 A